# EUROPÄISCHE PATENTSCHRIFT

(11) **EP 1 468 429 B1**
(45) Veröffentlichungstag und Bekanntmachung des Hinweises auf die Patenterteilung: **30.08.2006**
(21) Anmeldenummer: 03706248.6
(22) Anmeldetag: 22.01.2003
(51) Int. Cl.: H01C 7/18

(54) **ELEKTROKERAMISCHES BAUELEMENT MIT INNENELEKTRODEN**
ELECTROCERAMIC COMPONENT COMPRISING INNER ELECTRODES
COMPOSANT ELECTROCERAMIQUE COMPORTANT DEUX ELECTRODES INTERIEURES

(30) Priorität: 25.01.2002 DE 10202915
(43) Veröffentlichungstag der Anmeldung: 20.10.2004
(73) Patentinhaber: EPCOS AG, 81669 München (DE)
(72) Erfinder: KRUMPHALS, Robert, A-8530 Deutschlandsberg (AT)
(74) Vertreter: Epping - Hermann - Fischer
(86) Internationale Anmeldenummer: PCT/DE2003/000169
(87) Internationale Veröffentlichungsnummer: WO 2003/063185

(56) Entgegenhaltungen:
- EP-A- 1 058 276
- WO-A-02/11160
- PATENT ABSTRACTS OF JAPAN vol. 1997, no. 09, 30. September 1997 (1997-09-30) & JP 09 129477 A (TAIYO YUDEN CO LTD), 16. Mai 1997 (1997-05-16)

## Beschreibung

Beispiele für elektrische Bauelemente mit einem Keramikgrundkörper und Innenelektroden sind Thermistoren und Varistoren. Der Grundkörper von Varistoren ist häufig aus einer Mischung verschiedener Metalloxide, zum Beispiel auf der Basis von Zinkoxid, hergestellt. Varistoren weisen eine nicht lineare spannungsabhängige Widerstandsänderung auf, die zum Schutz eines elektrischen Schaltkreises vor Überspannung benutzt wird. Der Widerstandswert von Varistoren sinkt dabei mit steigender anliegender Spannung.

Bei der Ableitung der elektrischen Überspannungsimpulse durch den Varistor muß die Energie des Impulses von dem Keramikgrundkörper absorbiert werden. Vor allem bei kurzen Spannungsimpulsen kommt es zu einer starken lokalen Erwärmung des keramischen Grundkörpers zwischen den Innenelektroden. Ein Temperaturausgleich mit der Umgebung ist dabei nicht möglich. Dies führt zu großen Temperaturdifferenzen, die mechanische Spannungen im keramischen Grundkörper hervorrufen. Dabei verursacht die Innenelektrode eine weitere Schwächung der Querschnittsfläche des keramischen Grundkörpers. Aus diesem Grunde kann es bei zu starken lokalen Erwärmungen des Varistors zu Rissen im keramischen Grundkörper kommen, die dazu führen können, daß sich Keramikteile vom Grundkörper ablösen.

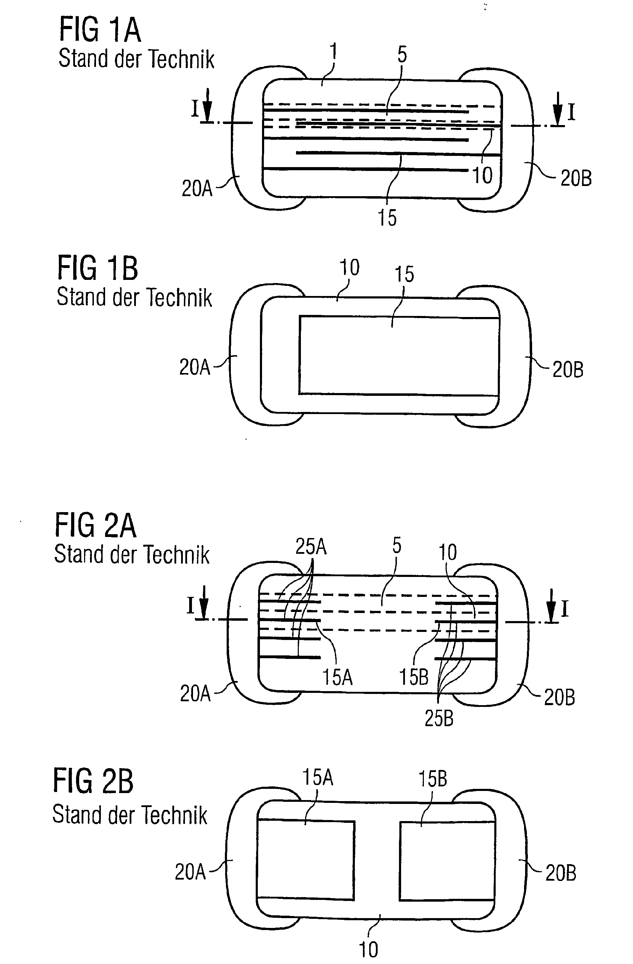

Herkömmliche Varistoren weisen auf den Stirnflächen ihrer Grundkörper zwei Kontaktflächen auf. Im Inneren des Grundkörpers sind Innenelektroden angeordnet, die im Querschnitt durch alle Ebenen kammartig ineinander geschoben sind, wobei die Innenelektroden alternierend mit je einer Kontaktfläche unterschiedlicher Polarität verbunden sind (siehe Figur 1A). Ein Querschnitt durch den Grundkörper des Varistors entlang einer keramischen Schicht zeigt, daß ein Großteil der Fläche dieser Schicht von der Innenelektrode eingenommen wird (siehe Figur 1B). Dies führt zu einer Schwächung der Querschnittsfläche des Keramikkörpers in diesem Bereich, so daß im Falle eines großen elektrischen Impulses mit Rißbildung im keramischen Grundkörper aufgrund von Überhitzung gerechnet werden muß.

Aus der Druckschrift DE 199 31 056 A1 ist eine andere Variante von Varistoren bekannt, bei denen Innenelektroden so angeordnet sind, daß jeweils zwei nicht miteinander überlappende Elektrodenstapel gebildet werden, die jeweils eine Kontaktfläche kontaktieren (siehe Figur 2A). Ein Querschnitt durch den Keramikgrundkörper entlang einer keramischen Schicht zeigt, daß zwei sich gegenüberliegende Innenelektroden 15A, 15B auf einer Keramikschicht angeordnet sind (siehe Figur 2B). Im Falle eines großen elektrischen Impulses kommt es bei Varistoren dieser Bauform aufgrund der fehlenden Überlappung der Elektroden ebenfalls zu lokalen Überhitzungen, die ein Zerbrechen des Grundkörpers verursachen können.

Aus der Offenlegungsschrift DE 198 06 296 A1 ist ein NTC-Thermistorelement bekannt, daß zumindest eine Keramikschicht aufweist, auf der eine längere und eine kürzere Innenelektrode angeordnet sind, deren Enden sich mit einem Abstand gegenüber stehen. Dabei können sowohl Innenelektroden überlappen, die mit einer gleichen, auf der Oberfläche des Bauelements angebrachten Kontaktfläche verbunden sind, oder auch Innenelektroden, die mit unterschiedlichen Kontaktflächen verbunden sind. Auch bei diesem Thermistorelement muß bei einem großen elektrischen Impuls mit Rißbildung im keramischen Grundkörper gerechnet werden.

Die Druckschrift JP 09 12 94 77 beschreibt einen Vielschichtkondensator. Dabei sind pro Elektrodenebene des Kondensators mehrere Innenelektroden zwischen dielektrischen Schichten des Kondensators angeordnet. Innenelektroden benachbarter Elektrodenebenen sind dabei jeweils versetzt zueinander angeordnet.

Ziel der vorliegenden Erfindung ist es daher, ein elektrisches Bauelement mit einem Keramikgrundkörper und Innenelektroden anzugeben, das einen elektrischen Impuls gut absorbieren kann und dabei eine gegenüber dem Stand der Technik erhöhte mechanische Stabilität aufweist.

Dieses Ziel wird erfindungsgemäßen durch ein Bauelement nach Anspruch 1 erreicht. Vorteilhafte Ausgestaltungen des Bauelements sind Gegenstand von Unteransprüchen.

Die Erfindung beschreibt ein elektrisches Bauelement mit einem Keramikgrundkörper der eine Abfolge von keramischen Schichten umfaßt, sowie mit mehreren auf den keramischen Schichten angeordneten Innenelektroden, wobei zumindest zwei Innenelektroden auf einer ersten keramischen Schicht angeordnet sind und eine erste Elektrodenebene bilden. Auf einer zweiten keramischen Schicht sind zumindest zwei weitere Innenelektroden angeordnet und bilden eine zweite Elektrodenebene. Weiterhin sind auf der Oberfläche des Keramikgrundkörpers zwei Kontaktflächen angeordnet, die elektrisch leitend mit den Innenelektroden verbunden sind. Dabei überlappen ausschließlich Innenelektroden die mit jeweils einer unterschiedlichen Kontaktfläche verbunden sind und gleichzeitig auf benachbarten ersten und zweiten keramischen Schichten angeordnet sind.

Ein erfindungsgemäßes Bauelement weist gegenüber einem herkömmlichen Bauelement eine erhöhte Impulsfestigkeit auf. Dies ist vor allen Dingen auf zwei Merkmale des erfindungsgemäßen Bauelements zurückzuführen. Zum einen überlappen Innenelektroden, die mit unterschiedlichen Kontaktflächen verbunden sind, also unterschiedliche Polarität aufweisen. Dadurch wird gewährleistet, daß die Energie eines elektrischen Impulses auf einer großen Fläche im Inneren des Bauteils absorbiert werden kann. Weiterhin weist ein erfindungsgemäßes Bauelement auf einer keramischen Schicht zumindest zwei Innenelektroden auf, was zur Folge hat, daß die Querschnittsfläche des keramischen Grundkörpers entsprechend der nicht von Innenelektroden bedeckten Oberfläche einer keramischen Schicht wesentlich größer ist als bei den oben genannten herkömmlichen Bauelementen. Dies hat zur Folge, daß der keramische Grundkörper eine erhöhte mechanische Stabilität und damit auch eine erhöhte Impulsfestigkeit aufweist.

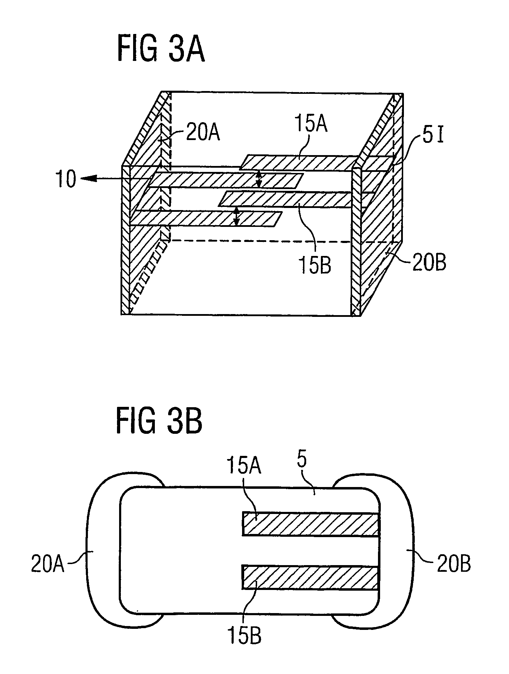

Bei einer Variante des erfindungsgemäßen Bauelements sind die Kontaktflächen auf sich gegenüberliegenden Stirnflächen des Keramikgrundkörpers angeordnet. Die auf der ersten keramischen Schicht angeordneten Innenelektroden sind dabei jeweils mit der gleichen Kontaktfläche verbunden. Dies bedeutet, daß die Innenelektroden auf der benachbarten zweiten keramischen Schicht jeweils mit der anderen Kontaktfläche verbunden sind. Bei dieser Bauform des erfindungsgemäßen Bauelements überlappen also jeweils auf unterschiedlichen keramischen Schichten angeordnete Innenelektroden, wobei die Innenelektroden auf einer Schicht jeweils mit der gleichen Kontaktfläche und die überlappenden Innenelektroden der benachbarten Schicht mit der anderen Kontaktfläche elektrisch leitend verbunden sind (siehe Figuren 3A und 3B).

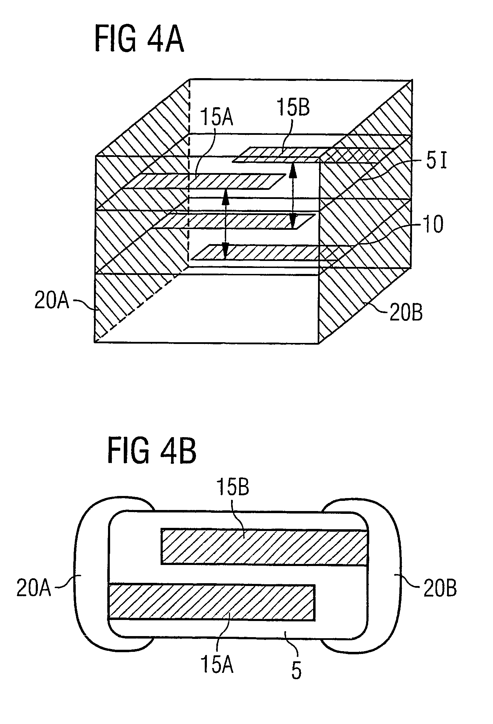

In einer anderen Variante der Erfindung sind die Kontaktflächen ebenfalls auf sich gegenüberliegenden Stirnflächen des Keramikgrundkörpers angeordnet, wobei die auf der ersten keramischen Schicht angeordneten Innenelektroden aber jeweils mit unterschiedlichen Kontaktflächen verbunden sind. Diese Innenelektroden überlappen jeweils mit Innenelektroden auf der benachbarten zweiten keramischen Schicht, die jeweils mit der anderen Kontaktfläche verbunden sind (siehe Figuren 4A und 4B).

In einer weiteren Ausgestaltung der Erfindung kann der Keramikgrundkörper eine alternierende Anordnung von mehreren ersten und zweiten keramischen Schichtbereichen sein. Dadurch lassen sich große Keramikgrundkörper mit einer Vielzahl von überlappenden Innenelektroden mit unterschiedlicher Polarität aufbauen.

In einer weiteren vorteilhaften Ausgestaltung der Erfindung werden die Hauptachsen von sich überlappenden Innenelektroden möglichst maximal zur Deckung gebracht, so daß sich die Innenelektroden maximal überlappen. Die Hauptachsen geben dabei die Vorzugsrichtung der größten Ausdehnung einer Innenelektrode an. Die Innenelektroden sind vorteilhafterweise als Elektrodenflächen ausgebildet, um eine möglichst große Überlappungsfläche zu erzeugen.

Der Keramikgrundkörper des erfindungsgeinäßen Bauelements umfaßt vorteilhafterweise eine Varistorkeramik. In diesem Fall werden die elektrischen Eigenschaften, also der Varistoreffekt durch diejenigen keramischen Volumenbereiche des Bauelements bestimmt, die zwischen überlappenden Innenelektroden unterschiedlicher Polarität angeordnet sind. Da bei dem erfindungsgemäßen Bauelement eine Vielzahl von Innenelektroden überlappen läßt sich dadurch ein Varistor mit einem großen Anteil an keramischen Volumenbereichen, die zwischen überlappenden Innenelektroden liegen, verwirklichen. Derartige Bauelemente weisen eine erhöhte Kapazität und Impulsfestigkeit auf.

Im folgenden soll die Erfindung anhand von Ausführungsbeispielen und Figuren erläutert werden.

Die Figuren 1A und 1B zeigen einen Quer- und Längsschnitt durch ein herkömmliches Bauelement mit überlappenden Innenelektroden.

Die Figuren 2A und 2B zeigen einen Quer- und einen Längsschnitt durch ein Bauelement nach dem Stand der Technik mit nicht überlappenden Elektrodenbündeln.

Die Figuren 3A und 3B zeigen eine perspektivische Ansicht und einen Längsschnitt durch eine Variante eines erfindungsgemäßen Bauelements.

Die Figuren 4A und 4B zeigen eine perspektivische Ansicht und einen Längsschnitt durch eine weitere Variante des erfindungsgemäßen Bauelements.

Figur 1A zeigt einen Querschnitt durch ein herkömmliches Bauelement mit einem Bauelementgrundkörper 1. Zu sehen ist, daß Innenelektroden 15, die auf benachbarten keramischen Schichten 5 und 10 angeordnet sind, überlappen. Dabei kontaktieren die Innenelektroden jeweils unterschiedliche Kontaktflächen 20A oder 20B. Figur 1B zeigt einen Längsschnitt durch die in Figur 1A mit I bezeichnete keramische Schicht 10. Zu sehen ist, daß in dieser keramischen Schicht 10 der Querschnitt der keramischen Schicht durch die Innenelektrode 15 sehr stark verkleinert und damit geschwächt ist. Ein solches Bauelement weist daher verminderte mechanische Stabilität auf, die sich auch negativ auch die Impulsfestigkeit des Bauelement auswirkt.

Figur 2A zeigt einen Querschnitt durch eine herkömmliches Bauelement, bei dem zwei Innenelektroden je keramischer Schicht 5 beziehungsweise 10 vorhanden sind. Diese Innenelektroden sind jeweils Bestandteil von Elektrodenbündeln 25A und 25B die jeweils eine unterschiedliche Kontaktfläche 20A und 20B kontaktieren und sich im Bauelement gegenüber stehen ohne dabei zu überlappen. Aufgrund der fehlenden Überlappung der Elektrodenbündel sind bei einem Bauelement dieser Bauart nicht ausreichende Anteile an keramischen Volumenbereichen, die zwischen Innenelektroden unterschiedlicher Polarität liegen, vorhanden, um energiereiche elektrische Impulse zu absorbieren. Figur 2B zeigt einen Längsschnitt durch die keramische Schicht 10 die in Figur 2A mit I bezeichnet ist. Zu sehen ist, daß sich zwei Innenelektroden 15A und 15B gegenüber stehen und dabei jeweils unterschiedliche Kontaktflächen 20A und 20B kontaktieren.

Figur 3A zeigt eine perspektivische Ansicht einer ersten Variante des erfindungsgemäßen Bauelements. Zu sehen ist, daß auf zwei benachbarten Keramikbereichen 5 beziehungsweise 10 jeweils zwei Innenelektroden 15A und 15B vorhanden sind, wobei beide Innenelektroden die auf einer keramischen Schicht angeordnet sind die gleiche Kontaktfläche kontaktieren. Sie überlappen mit auf benachbarten keramischen Schichten angeordneten Innenelektroden, die jeweils unterschiedliche Kontaktflächen 20A und 20B kontaktieren, wie durch Doppelpfeile in Figur 3A angedeutet ist. Durch die Überlappung der Innenelektroden unterschiedlicher Polarität wird eine besonders große Fläche zum Absorbieren der elektrischen Impulse geschaffen. Figur 3B zeigt einen Längsschnitt durch den in Figur 3A mit I bezeichneten keramischen Schichtbereich 5. Zu sehen ist, daß auf dieser keramischen Schicht 5 zwei Innenelektroden 15A und 15B angeordnet sind, die jeweils die gleiche Kontaktfläche 20B kontaktieren. Aufgrund der zwei Innenelektroden auf der keramischen Schicht resultiert hier ein E-förmiger Querschnitt des keramischen Grundkörpers. Im Vergleich zu herkömmlichen Bauelementen (siehe z.B. Figur 1B) resultiert somit eine größere Querschnittsfläche und damit eine erhöhte mechanische Stabilität des Bauelementgrundkörpers.

Figur 4A zeigt eine perspektivische Ansicht einer weiteren Variante des erfindungsgemäßen Bauelements. Zu sehen ist, daß auf benachbarten keramischen Schichten 5 beziehungsweise 10 jeweils zwei Innenelektroden pro keramischer Schicht angeordnet sind, wobei diejenigen Innenelektroden, die auf unterschiedlichen keramischen Schichten angeordnet sind und unterschiedliche Polarität aufweisen, das heißt unterschiedliche Kontaktflächen kontaktieren, überlappen. Die Überlappung ist durch die Doppelpfeile in Figur 4A schematisch dargestellt. Figur 4B zeigt einen Längsschnitt durch die in Figur 4A mit I bezeichnete keramische Schicht 5. Zu sehen ist, daß auf dieser Schicht zwei Innenelektroden 15A und 15B angeordnet sind, die jeweils unterschiedliche Kontaktflächen 20A und 20B kontaktieren. Als Folge davon entsteht ein S-förmiger Querschnitt der keramischen Schicht 5 in diesem Bereich. Auch bei dieser Variante ist damit die Querschnittfläche des keramischen Grundkörpers in jeder keramischen Schicht bei gleichzeitig überlappenden Innenelektroden größer als bei herkömmlichen Bauelementen, so daß eine erhöhte mechanische Stabilität und damit auch eine erhöhte Impulsfestigkeit resultiert.

Die erfindungsgemäßen Bauelemente lassen sich besonders vorteilhaft mittels Vielschichttechnologie herstellen. Dabei wird der keramische Grundkörper durch Verstapeln von keramischen Grünfolien hergestellt. Die Innenelektroden können in diesem Fall zum Beispiel durch Drucken auf die keramischen Grünfolien aufgebracht werden. Dabei sind erfindungsgemäß mindestens zwei Innenelektroden je keramischer Schicht vorhanden, die durch einen unbedruckten Bereich voneinander getrennt sind, so daß sie nicht überlappen und ein großer Querschnitt des Keramikgrundkörpers in diesem Bereich resultiert.

Erfindungsgemäße Varistoren mit einer Varistorspannung von 22 bis 24 Volt wurden elektrischen Impulsen bis zu 50 Joule ausgesetzt. Testmessungen ergaben dabei, daß sich die Varistorspannung im keramischen Grundkörper nicht verändert, was ein klares Indiz dafür ist, daß der Grundkörper durch die elektrischen Impulse nicht beschädigt wurde.

Die Erfindung beschränkt sich nicht auf die hier aufgeführten Ausführungsbeispiele. Weitere Variationen des erfindungsgemä-ßen Bauelements sind vor allem bezüglich der Anzahl der Innenelektroden je keramischer Schicht möglich.

## Patentansprüche

1. Elektrisches Bauelement
- mit einem Keramikgrundkörper, der eine Abfolge von keramischen Schichten umfaßt,
- mit mehreren zwischen jeweils zwei keramischen Schichten angeordneten Elektrodenebenen, wobei in jeder Elektrodenebene (5, 10) zumindest zwei Innenelektroden (15A, 15B) angeordnet sind,
- mit zwei auf der Oberfläche des Keramikgrundkörpers angeordneten Kontaktflächen (20A, 20B), die elektrisch leitend mit den Innenelektroden (15A, 15B) verbunden sind,
- wobei Innenelektroden (15A, 15B) maximal miteinander überlappen, die mit jeweils einer unterschiedlichen Kontaktfläche (20A, 20B) verbunden sind.

2. Bauelement nach dem vorherigen Anspruch,
- bei dem die Kontaktflächen (20A, 20B) auf den sich gegenüberliegenden Stirnflächen des Keramikgrundkörpers angeordnet sind,
- bei dem alle Innenelektroden (15A, 15B) jeweils einer Elektrodenebene (5, 10) mit der gleichen Kontaktfläche verbunden sind.

3. Bauelement nach Anspruch 1,
- bei dem die Kontaktflächen auf den sich gegenüberliegenden Stirnflächen des Keramikgrundkörpers angeordnet sind,
- bei dem die in einer Elektrodenebene angeordneten Innenelektroden mit unterschiedlichen Kontaktflächen verbunden sind.

4. Bauelement nach einem der vorherigen Ansprüche, bei dem im Keramikgrundkörper erste und zweite Elektrodenebenen alternieren.

5. Bauelement nach einem der vorherigen Ansprüche,
- bei dem die Innenelektroden flächig ausgeformt sind.

6. Bauelement nach einem der vorherigen Ansprüche,
- bei dem der Keramikgrundkörper eine Varistorkeramik umfaßt.

## Claims

1. Electrical component
- having a ceramic base body which comprises a sequence of ceramic layers,
- having a plurality of electrode planes which are arranged between two respective ceramic layers, at least two inner electrodes (15A, 15B) being arranged on each electrode plane (5, 10),
- having two contact areas (20A, 20B) which are arranged on the surface of the ceramic base body and are electrically conductively connected to the inner electrodes (15A, 15B),
- inner electrodes (15A, 15B) which are connected to a respective different contact area (20A, 20B) overlapping one another to a maximum extent.

2. Component according to the preceding claim,
- in which the contact areas (20A, 20B) are arranged on the mutually opposite end faces of the ceramic base body,
- in which all of the inner electrodes (15A, 15B) on a respective electrode plane (5, 10) are connected to the same contact area.

3. Component according to Claim 1,
- in which the contact areas are arranged on the mutually opposite end faces of the ceramic base body,
- in which the inner electrodes which are arranged on an electrode plane are connected to different contact areas.

4. Component according to one of the preceding claims,
in which first and second electrode planes alternate in the ceramic base body.

5. Component according to one of the preceding claims,
- in which the inner electrodes are flat.

6. Component according to one of the preceding claims,
- in which the ceramic base body comprises a varistor ceramic.

## Revendications

1. Composant électrique
- comprenant un corps de base en céramique, qui comprend une succession de couches en céramique ;
- comprenant plusieurs plans d'électrode disposés, respectivement, entre deux couches en céramique, au moins deux électrodes (15A, 15B) intérieures étant disposées dans chaque plan (5, 10) d'électrode ;
- comprenant deux faces (20A, 20B) de contact, qui sont disposées à la surface du corps de base en céramique et qui sont reliées d'une manière conductrice de l'électricité aux électrodes (15A, 15B) intérieures ;
- dans lequel des électrodes (15A, 15B) intérieures qui sont reliées à, respectivement, une face (20A, 20B) de contact différente se chevauchent entre elles au maximum.

2. Composant suivant la revendication précédente,
- dans lequel les faces (20A, 20B) de contact sont disposées sur les faces frontales opposées du corps de base en céramique ;
- dans lequel toutes les électrodes (15A, 15B) intérieures de, respectivement, un plan (5, 10) d'électrode sont reliées à la même face de contact.

3. Composant suivant la revendication 1,
- dans lequel les faces de contact sont disposées sur les faces frontales opposées du corps de base en céramique ;
- dans lequel les électrodes intérieures disposées dans un plan d'électrode sont reliées à des faces de contact différentes.

4. Composant suivant l'une des revendications précédentes,
- dans lequel des premier et deuxième plans d'électrode alternent dans le corps de base en céramique.

5. Composant suivant l'une des revendications précédentes,
- dans lequel les électrodes intérieures sont de forme plate.

6. Composant suivant l'une des revendications précédentes,
- dans lequel le corps de base en céramique comprend une céramique de varistance.
